# EUROPEAN PATENT APPLICATION

(11) **EP 1 411 724 A2**
(43) Date of publication of application: **21.04.2004**
(21) Application number: 03022900.9
(22) Date of filing: 09.10.2003
(51) Int. Cl.: H04N 7/088, H04N 7/24

(54) **Contents providing system, mobile terminal**

(30) Priority: 16.10.2002 JP 2002302260
(71) Applicant: NTT DoCoMo, Inc., Tokyo 100-6150 (JP)
(72) Inventor: Nagaoka, Tatsuji Intellectual Property Department, Chiyoda-ku Tokyo (JP); Nomura, Kazuo Intellectual Property Department, Chiyoda-ku Tokyo (JP)
(74) Representative: HOFFMANN - EITLE

(57) **Abstract**

The object of the present invention is to provide a contents providing system which can give an incentive to audiences to view the broadcast program, by providing contents information from a broadcast station apparatus to a mobile terminal via a television set, and the mobile terminal which can be used in the contents providing system. The broadcast station apparatus (50) comprises a multiplexing signal transmitter (53, 54) configured to transmit a multiplexing signal multiplexing broadcast program information and contents information. The television set (30) comprises a separator (32) configured to separate the broadcast program information and the contents information from the received multiplexing signal, a reproducer (33) configured to reproduce the broadcast program information, and a transmitter (35) configured to transmit the contents information to the mobile terminal during the reproducing of the broadcast program information. The mobile terminal (10) comprises a receiver (11, 13) configured to receive the contents information during the reproducing of the broadcast program information.

## Description

### CROSS REFERENCE TO RELATED APPLICATION

This application is based upon and claims the benefit of priority from the prior Japanese Patent Application No. P2002-302260, filed on October 16, 2002; the entire contents of which are incorporated herein by reference.

### BACKGROUND OF THE INVENTION

### 1. Field of the Invention

The present invention relates to a contents providing system whereby the broadcast station apparatus provides contents information to a mobile terminal via a television set, and the mobile terminal which can be used in the contents providing system.

### 2. Description of the Related Art

Conventionally, a contents providing system whereby a broadcast station apparatus transmits predetermined programs to a television set and a mobile terminal downloads the predetermined programs stored in the television set is known.

However, there is a problem in that the conventional contents providing system can not provide a viewing incentive to audiences, because the conventional contents providing system is built only on the premise that the broadcast station apparatus transmits information about the predetermined programs to the television set before the start of the broadcast program.

### BRIEF SUMMARY OF THE INVENTION

In viewing of the foregoing, it is an object of the present invention to provide a contents providing system which can give an incentive to audiences to view the broadcast program, by providing contents information from a broadcast station apparatus to a mobile terminal via a television set, and the mobile terminal which can be used in the contents providing system.

A first aspect of the present invention is summarized as a contents providing system having a broadcast station apparatus and a television set.

The broadcast station apparatus comprises a multiplexing signal transmitter configured to transmit a multiplexing signal multiplexing broadcast program information and contents information.

The television set comprises a multiplexing signal receiver configured to receive the multiplexing signal; a separator configured to separate the broadcast program information and the contents information from the received multiplexing signal; a reproducer configured to reproduce the broadcast program information; and a transmitter configured to transmit the contents information to a mobile terminal during the reproducing of the broadcast program information.

The mobile terminal comprises a receiver configured to receive the contents information during the reproducing of the broadcast program information.

In the first aspect, the multiplexing signal transmitter of the broadcast station apparatus can transmit the multiplexing signal multiplexing each of a plurality of contents data on the broadcast program information independently. The contents information is divided into the plurality of contents data. The separator of the television set can separate the broadcast program information and the plurality of contents data from the received multiplexing signal. The transmitter of the television set can transmit the plurality of contents data to the mobile terminal during the reproducing of the broadcast program information. The receiver of the mobile terminal can receive the plurality of contents data, and can create the contents information based on the plurality of contents data, during the reproducing of the broadcast program information.

In the first aspect, the mobile terminal can comprise a request transmitter configured to transmit an information provision request to the television set during the reproducing of the broadcast program information. The television set can comprise an information provision request receiver configured to receive the information provision request. The transmitter of the television set can transmit the contents information in accordance with reception of the information provision request in the information provision request receiver during the reproducing of the broadcast program information.

In the first aspect, the mobile terminal can comprise a request transmitter configured to transmit an information provision request to the television set during the reproducing of the broadcast program information. The television set can comprise an information provision request receiver configured to receive the information provision request. The transmitter of the television set can transmit the contents data in accordance with reception of the information provision request in the information provision request receiver during the reproducing of the broadcast program information.

A second aspect of the present invention is summarized as a mobile terminal comprising a receiver configured to receive a plurality of contents data transmitted from a television set during the reproducing of broadcast program information; and a creator configured to create contents information based on the plurality of contents data during the reproducing of the broadcast program information.

In the second aspect, the mobile terminal can further comprise a request transmitter configured to transmit an information provision request to the television set during the reproducing of the broadcast program information. The receiver can receive the contents data transmitted from the television set in accordance with reception of the information provision request during the reproducing of the broadcast program information.

### BRIEF DESCRIPTION OF THE SEVERAL VIEWS OF THE DRAWINGS

FIG. 1 is a diagram showing the entire configuration of a contents providing system according to one embodiment of the present invention.
FIG. 2 is a functional block diagram of a mobile terminal in the contents providing system according to the embodiment.
FIG. 3 is a functional block diagram of a television set in the contents providing system according to the embodiment.
FIG. 4 is a functional block diagram of a broadcast station apparatus in the contents providing system according to the embodiment.
FIG.5 is a sequence diagram illustrating the operation of the contents providing system according to the embodiment.
FIG. 6 is an external view of computer-readable media for recording a program which can be used in the contents providing system according to the embodiment.

### DETAILED DESCRIPTION OF THE INVENTION

### <A configuration of a contents providing system according to an embodiment of the present invention>

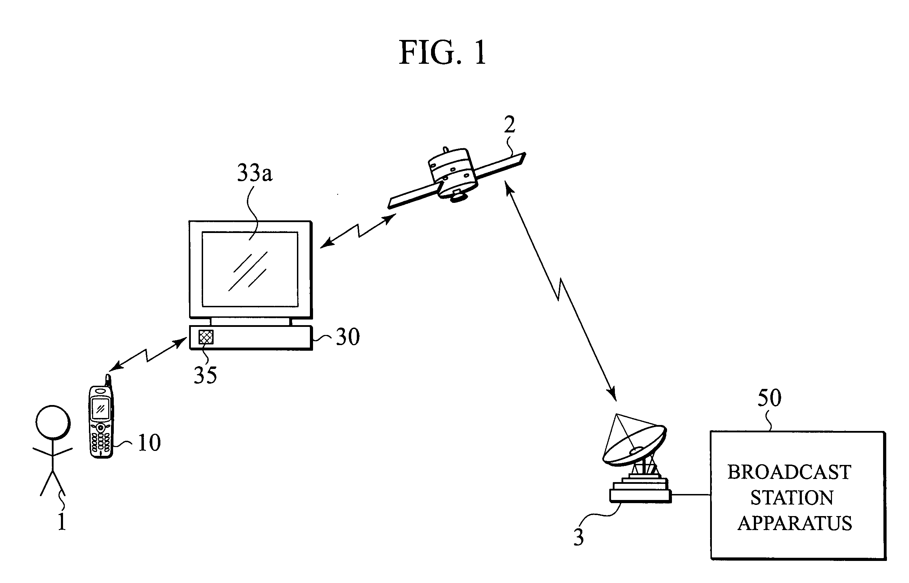

Referring to FIG. 1 to FIG. 4, the configuration of a contents providing system according to an embodiment of the present invention will be described. The contents providing system is configured to provide contents information from a broadcast station apparatus 50 to a mobile terminal 10 via a television set 30.

The contents information can be various data such as sound data, image data or character data. For example, the contents information can be sound data for an incoming call melody which the mobile terminal 10 can reproduce when an incoming call occurs, image data for a call-waiting mode display which the mobile terminal 10 can display on a monitor in incoming call waiting mode, or character data showing a specified URL or telephone directory (telephone numbers, addresses, names and e-mail addresses).

The contents information can be schedule information. For example, the schedule information can be information for automatically storing concert schedules in a scheduler of the mobile terminal 10.

The contents information can be loyalty point information. For example, the user 1 can utilize the loyalty point information to purchase products relating to a predetermined commercial program using the mobile terminal 10. The user 1 can acquire the point information when the television set 30 reproduces the predetermined commercial program.

The contents information can be sample information. For example, the user 1 can get a sample by transmitting the sample information to a vending machine using the mobile terminal 10.

The contents information can be coupon information formed by two-dimensional bar code and so on.

The contents information can be karaoke music information. For example, the mobile terminal 10 can acquire the karaoke music information in a commercial program advertising the new release of predetermined music. A karaoke playing machine can reproduce the karaoke information.

The contents information can be location information. For example, the mobile terminal 10 can search and display a route from the current location of the mobile terminal 10 to a predetermined location based on the location information.

The contents information can be recording information. For example, the mobile terminal 10 can acquire recording information in a commercial program advertising a predetermined program. A video tape recorder can reproduce the recording information.

As shown in FIG. 1, the contents providing system according to the embodiment is configured with a mobile terminal 10 , a television set 30 and a broadcast station apparatus 50 .

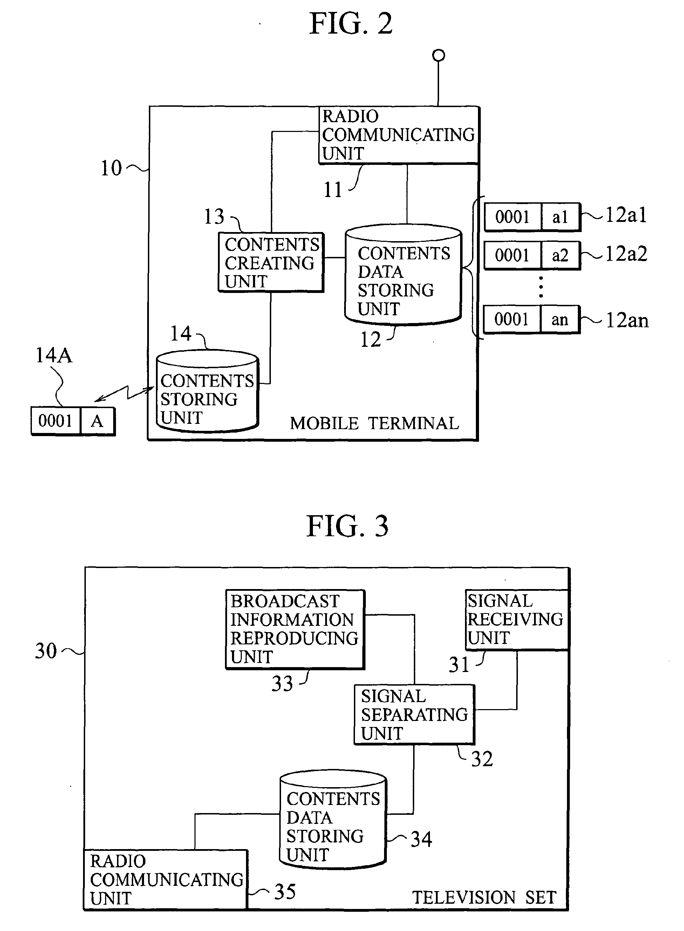

Referring to FIG. 2, functions of the mobile terminal 10 included in the contents providing system according to the embodiment will be described.

As shown in FIG. 2, the mobile terminal 10 is configured with a radio communicating unit 11, a contents data storing unit 12 , a contents creating unit 13 and a contents storing unit 14.

The radio communicating unit 11 is configured to perform radio communication with a radio communicating unit 35 of the television set 30. The radio communicating unit 11 can perform close radio communication such as Bluetooth and IrDA with the television set 30 , or mobile communication with the television set 30 via a base station.

To be more specific, the radio communicating unit 11 is configured to receive contents information or contents data transmitted from the television set 30 via radio circuits. The contents information can be divided into a plurality of contents data.

The radio communication unit 11 can be configured to receive the contents information or the contents data, while the television set 30 is reproducing broadcast program information.

The radio communication unit 11 is configured to transmit an information provision request to the television set 30, by an operation of the user 1 or automatically at a predetermined timing. The information provision request is information requesting the television set 30 to transmit the contents information or the contents data.

The radio communication unit 11 can be configured to transmit the information provision request to the television set 30, while the television set 30 is reproducing broadcast program information.

The contents data storing unit 12 is configured to store contents data received by the radio communication unit 11. In FIG. 2, the contents data storing unit 12 stores a plurality of contents data 12a1 to 12an for creating contents information 14A.

The contents creating unit 13 is configured to create the contents information using the plurality of contents data stored in the contents data storing unit 12. In FIG. 2, the contents creating unit 13 creates the contents information 14A by combining the plurality of contents data 12a1 to 12an.

The contents creating unit 13 can be configured to create sound data for an incoming call melody in accordance with a predetermined code (one contents data) inputted by the user 1, using the plurality of contents data (the other contents data).

The contents storing unit 14 is configured to store the contents information created by the contents creating unit 13. In FIG. 2, the contents storing unit 14 stores the contents information 14A. The contents storing unit 14 can store the contents information received by the radio communication unit 11.

In the embodiment, the radio communication unit 11 constitutes a request transmitter configured to transmit an information provision request to the television set during the reproducing of the broadcast program information.

The radio communication unit 11 and the contents creating unit 13 constitute a receiver configured to receive the contents information from the television set during the reproducing of the broadcast program information, or to receive the plurality of contents data from the television set and to create the contents information based on the plurality of contents data during the reproducing of the broadcast program information.

Referring to FIG. 3, functions of the television set 30 included in the contents providing system according to the embodiment will be described.

As shown in FIG. 3, the television set 30 is configured with a signal receiving unit 31, a signal separating unit 32, a broadcast information reproducing unit 33, a contents data storing unit 34 and a radio communicating unit 35.

The signal receiving unit 31 is configured to receive a multiplexing signal multiplexing broadcast program information and contents information transmitted from the broadcast station apparatus 50 via a broadcast antenna 3 and a broadcast relaying apparatus 2.

The signal receiving unit 31 is configured to receive a multiplexing signal multiplexing broadcast program information and a plurality of contents data via a broadcast antenna 3 and a broadcast relaying apparatus 2.

The signal receiving unit 31 can receive the multiplexing signal as a BS (broadcast satellite) digital broadcast signal, a CS (communication satellite) digital broadcast signal, a terrestrial digital broadcast signal, or a cable television broadcast signal. The signal receiving unit 31 can receive the multiplexing signal as an analog broadcast signal.

The signal separating unit 32 is configured to separate the broadcast program information and the plurality of contents data (or contents information) from the multiplexing signal received by the signal receiving unit 31.

To be more specific, the signal separating unit 32 separates the plurality of contents data included in available bandwidths in which the broadcast program information can be transmitted.

The broadcast information reproducing unit 33 is configured to reproduce the broadcast program information separated by the signal separating unit 32. To be more specific, the broadcast information reproducing unit 33 reproduces a broadcast program in a television monitor 33a in accordance with the broadcast program information.

The contents data storing unit 34 is configured to store the plurality of contents data (or contents information) separated by the signal separating unit 32.

The radio communicating unit 35 is configured to perform radio communication with the mobile terminal 10. The radio communicating unit 35 can perform close radio communication such as Bluetooth and IrDA with the mobile terminal 10 , or mobile communication with the mobile terminal 10 via a base station.

To be more specific, the radio communicating unit 35 is configured to transmit the contents data (or the contents information) stored in the contents data storing unit 34 to the mobile terminal 10 via radio circuits.

The radio communicating unit 35 can be configured to transmit the contents data (or the contents information) while the television set 30 is reproducing the broadcast program information.

The radio communicating unit 35 can be configured to transmit the contents data (or the contents information) to the mobile terminal 10, in accordance with reception of an information provision request transmitted from the mobile terminal 10 or automatically at a predetermined timing.

In the embodiment, the signal separating unit 32 constitutes a separator configured to separate the broadcast program information and the contents information from the multiplexing signal.

The broadcast information reproducing unit 33 constitutes a reproducer configured to reproduce the broadcast program information.

The radio communicating unit 35 constitutes a transmitter configured to transmit the contents information or the contents data to the mobile terminal during the reproducing of the broadcast program information.

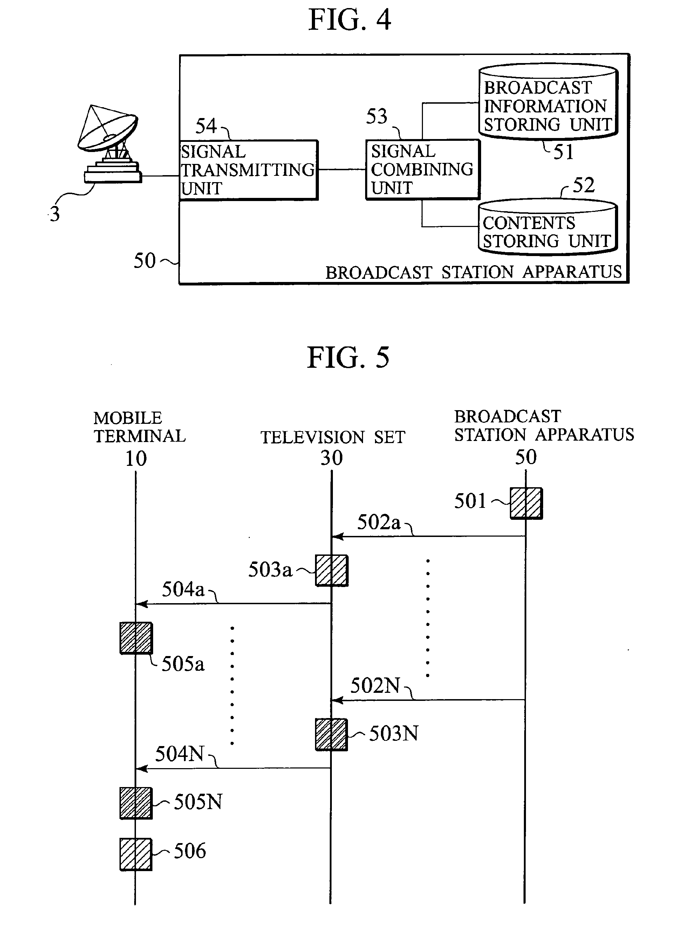

Referring to FIG. 4, functions of the broadcast station apparatus 50 included in the contents providing system according to the embodiment will be described.

AS shown in FIG. 4, the broadcast station apparatus 50 is configured with a broadcast information storing unit 51, a contents storing unit 52, a signal combining unit 53 and a signal transmitting unit 54.

The broadcast information storing unit 51 is configured to store broadcast program information. The contents storing unit 52 is configured to store contents information.

The signal combining unit 53 is configured to create a multiplex signal multiplexing the broadcast program information stored in the broadcast information storing unit 51 and the contents information stored in the contents storing unit 52 using a predetermined method.

To be more specific, the signal combining unit 53 multiplexes the contents information in available bandwidths in which the broadcast program information can be transmitted. The signal combining unit 53 can create the multiplexing signal multiplexing each of the plurality of contents data into which the contents information is divided on the broadcast program information independently.

For example, the signal combining unit 53 can multiplex each of the plurality of contents data into which the contents information is divided in a part of the broadcast program information reproduced during the first 20 minutes or the last 20 minutes of one-hour broadcast program which can be reproduced by the broadcast program information. As a result, a user 1 has to view the first 20 minutes or the last 20 minutes of the one-hour broadcast program in order to receive the contents information relating to the one-hour broadcast program, so as to increase the audience viewing the one-hour broadcast program.

The signal transmitting unit 54 is configured to transmit the multiplex signal via the broadcast antenna 3 and the broadcast relay apparatus 2.

To be more specific, the signal transmitting unit 54 transmits the multiplex signal using the digital broadcast method, the analog broadcast method or the cable television method.

In the embodiment, the signal combining unit 53 and the signal transmitting unit 54 constitute a multiplexing signal transmitter configured to transmit a multiplexing signal multiplexing broadcast program information and contents information (contents data).

### <An operation of the contents providing system according to the embodiment >

Referring to FIG. 5, the operation of the contents providing system according to the embodiment will be described.

As shown in FIG. 5, in step 501, the signal combining unit 53 of the broadcast station apparatus 50 creates a multiplex signal multiplexing broadcast program information and a plurality of contents data.

In step 502a, the signal transmitting unit 54 of the broadcast station apparatus 50 transmits the multiplex signal to the television set 30 via the broadcast antenna 3 and the broadcast relay apparatus 2.

In step 503a, the signal separating unit 32 of the television set 30 separates the broadcast program information and the contents data from the multiplex signal, and the broadcast information reproducing unit 33 of the television set 30 reproduces the separated broadcast program information.

In step 504a, the radio communicating unit 35 of the television set 30 transmits the separated contents data to the mobile terminal 10 in accordance with reception of an information provision request transmitted from the mobile terminal 10 or at a predetermined timing.

In step 505a, the radio communicating unit 11 of the mobile terminal 10 receives the contents data, and the contents data storing unit 12 of the mobile terminal 10 stores the received contents data.

Steps similar to the steps 502a to 505a are repeated until the broadcast program ends.

In step 505N, the radio communicating unit 11 of the mobile terminal 10 receives the last contents data, and the contents data storing unit 12 of the mobile terminal 10 stores the last contents data.

In step 506, the contents creating unit 13 of the mobile terminal 10 creates contents information relating to the broadcast program based on the received contents data relating to the broadcast program, and the contents storing unit 14 stores the contents information.

### <Functions and effects of the contents providing system according to the embodiment >

In the contents providing system according to the embodiment, a user 1 wishing to receive contents information relating to broadcast program information (for example, sound data for an incoming call melody, image data for a call-waiting mode display and so on) has to receive the contents information transmitted from a television set 30 via mobile terminal 10 during the reproducing of the broadcast program information, so that the contents providing system can give an incentive to the user 1 to view the broadcast program reproduced by the television set 30.

In the contents providing system according to the embodiment, the radio communicating unit 11 of the mobile terminal 10 receives a plurality of contents data during the reproducing of broadcast program information, and the contents creating unit 13 of the mobile terminal 10 creates contents information using the received contents data, so that a user 1 wishing to receive the contents information relating to the broadcast program information has to receive the contents data transmitted from a television set 30 via mobile terminal 10 during the reproducing of the broadcast program information, and the contents providing system can give an incentive to the user 1 to view the broadcast program reproduced by the television set 30.

In the contents providing system according to the embodiment, the radio communicating unit 35 of the television set 30 transmits contents information or contents data in accordance with reception of an information provision request during the reproducing of broadcast program information, so that the television set 30 can reduce the power of transmission of the contents information or the contents data.

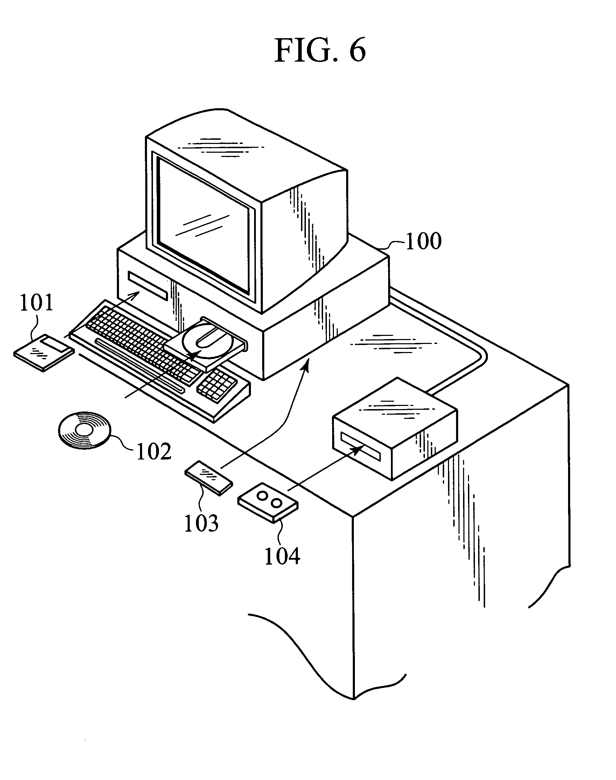

Program (mobile terminal program) which can make a computer 100 to execute a function of the mobile terminal 10 according to the embodiment can be recorded in a computer readable media. As shown in FIG. 6 , for example, the computer readable media includes a floppy disk 101, a compact disk 102, an IC chip 103, a cassette tape 104 and so on.

According to the computer readable media recording the mobile terminal program, the mobile terminal program can be stored, transported and sold easily.

A user 1 can download the mobile terminal program from a specified server via a communication network using the mobile terminal 10.

The present invention can provide a contents providing system which can give an incentive to audiences to view the broadcast program, by providing contents information from a broadcast station apparatus to a mobile terminal via a television set, and the mobile terminal which can be used in the contents providing system.

Additional advantages and modifications will readily occur to those skilled in the art. Therefore, the invention in its broader aspects is not limited to the specific details and the representative embodiment shown and described herein. Accordingly, various modifications may be made without departing from the spirit or scope of the general inventive concept as defined by the appended claims and their equivalents.

## Claims

1. A contents providing system having a broadcast station apparatus and a television set, wherein
the broadcast station apparatus comprises a multiplexing signal transmitter configured to transmit a multiplexing signal multiplexing broadcast program information and contents information;
the television set comprises:
a multiplexing signal receiver configured to receive the multiplexing signal;
a separator configured to separate the broadcast program information and the contents information from the received multiplexing signal;
a reproducer configured to reproduce the broadcast program information; and
a transmitter configured to transmit the contents information to a mobile terminal during the reproducing of the broadcast program information.

2. The contents providing system according to claim 1, wherein
the multiplexing signal transmitter of the broadcast station apparatus transmits the multiplexing signal multiplexing each of a plurality of contents data on the broadcast program information independently, the contents information being divided into the plurality of contents data;
the separator of the television set separates the broadcast program information and the plurality of contents data from the received multiplexing signal;
the transmitter of the television set transmits the plurality of contents data to the mobile terminal during the reproducing of the broadcast program information.

3. The contents providing system according to claim 1, wherein
the mobile terminal comprises a request transmitter configured to transmit an information provision request to the television set during the reproducing of the broadcast program information;
the television set comprises an information provision request receiver configured to receive the information provision request; and
the transmitter of the television set transmits the contents information in accordance with reception of the information provision request in the information provision request receiver during the reproducing of the broadcast program information.

4. The contents providing system according to claim 2, wherein
the television set comprises an information provision request receiver configured to receive an information provision request from the mobile station during the reproducing of the broadcast program information; and
the transmitter of the television set transmits the contents data in accordance with reception of the information provision request in the information provision request receiver during the reproducing of the broadcast program information.

5. A mobile terminal comprising:
a receiver configured to receive a plurality of contents data transmitted from a television set during the reproducing of broadcast program information; and
a creator configured to create contents information based on the plurality of contents data during the reproducing of the broadcast program information.

6. The mobile terminal according to claim 5,the mobile terminal further comprising
a request transmitter configured to transmit an information provision request to the television set during the reproducing of the broadcast program information; and wherein
the receiver receives the contents data transmitted from the television set in accordance with reception of the information provision request during the reproducing of the broadcast program information.
